# EUROPÄISCHE PATENTSCHRIFT

(11) **EP 3 149 326 B1**
(45) Veröffentlichungstag und Bekanntmachung des Hinweises auf die Patenterteilung: **28.10.2020**
(21) Anmeldenummer: 15725587.8
(22) Anmeldetag: 26.05.2015
(51) Int. Cl.: F03D 13/20, F03D 13/10, E04H 12/22, E04H 12/12

(54) **WINDENERGIEANLAGEN-TURM UND VERFAHREN ZUM ERRICHTEN EINES WINDENERGIEANLAGEN-TURMS**
WIND TURBINE TOWER AND METHOD FOR ERECTING A WIND TURBINE TOWER
TOUR D'ÉOLIENNE ET PROCÉDÉ PERMETTANT D'ÉRIGER UNE TOUR D'ÉOLIENNE

(30) Priorität: 23.05.2014 DE 102014209857
(43) Veröffentlichungstag der Anmeldung: 05.04.2017
(73) Patentinhaber: Wobben Properties GmbH, 26607 Aurich (DE)
(72) Erfinder: HORN, Günther, 26605 Aurich (DE)
(74) Vertreter: Eisenführ Speiser
(86) Internationale Anmeldenummer: PCT/EP2015/061515
(87) Internationale Veröffentlichungsnummer: WO 2015/177377

(56) Entgegenhaltungen:
- CN-U- 201 874 761
- CN-Y- 201 401 294
- DE-U1-202010 001 337
- US-A1- 2014 115 978

## Beschreibung

Die vorliegende Erfindung betrifft einen Windenergieanlagen-Turm sowie ein Verfahren zum Errichten eines Windenergieanlagen-Turms.

Insbesondere für Türme von Windenergieanlagen ist die Erstellung eines dauerhaft stabilen und ebenen Fundamentes von großer Bedeutung. Das Fundament einer Windenergieanlage wird erstellt, indem zunächst in einem Fundamentbett eine sogenannte Sauberkeitsschicht, also eine möglichst plan und horizontal verlaufende Zement- oder Betonschicht erstellt wird. Danach werden an den Fundamentsegmenten, d. h. den unteren Segmenten des aus mehreren Segmenten bestehenden Turms, Stützstangen angebracht, mit denen das Fundamentsegment auf der Sauberkeitsschicht aufgestellt wird. Um Unebenheiten der Sauberkeitsschicht auszugleichen und das Fundamentsegment möglichst horizontal auszurichten, werden die Stützstangen unterschiedlich weit in die Unterseite des Fundamentsegmentes eigeschraubt. Die Stützstangen weisen dazu eine Gewindestange auf.

DE 102 26 996 A1 beschreibt ein Verfahren zum Errichten eines Fundaments eines aus mehreren Segmenten bestehenden Turms einer Windenergieanlage. Dazu wird ein Fundamentbett ausgehoben und eine stabile, im Wesentlichen ebene und horizontal verlaufende Sauberkeitsschicht wird erstellt. Ein Fundamentsegment der Windenergieanlage wird auf die Sauberkeitsschicht aufgesetzt, wobei an den Fundamentsegmenten verteilt mindestens drei höhenverstellbare Stützstangen mittels eines am Ende der Stützstangen angebrachten Stützfußes derart angebracht sind, dass nur die Stützstangen auf vorgegebenen Stützpunkten der Sauberkeitsschicht aufgestellt werden. Anschließend wird eine Bewehrung auf der Sauberkeitsschicht hergestellt und das restliche Fundament wird mit Fundamentmasse wie beispielsweise Beton bis über den unteren Rand des Fundamentsegmentes hinaus aufgegossen.

In der prioritätsbegründenden deutschen Patentanmeldung hat das Deutsche Patent- und Markenamt die folgenden Dokumente recherchiert: DE 102 26 996 A1, DE 20 2010 001 337 U1, US 2013/0129525 A1 und WO 2012/168467 A2.

CN 201401294 Y zeigt einen Turm einer Windenergieanlage mit einer Mehrzahl von Turmsegmenten, welche aufeinander platziert sind. Ein Betonelement weist eine Nische und eine Durchgangsbohrung auf. In der Nische kann eine Nivelliereinheit platziert werden. Weiterer Stand der Technik ist aus CN 201874761 U bekannt.

Es ist eine Aufgabe der vorliegenden Erfindung, einen Windenergieanlagen-Turm sowie ein Verfahren zum Errichten eines Turms einer Windenergieanlage vorzusehen, welches eine einfache und exakte Ausrichtung bzw. Nivellierung des unteren Turmsegmentes ermöglicht.

Diese Aufgabe wird durch einen Windenergieanlagen-Turm nach Anspruch 1 sowie durch ein Verfahren zum Errichten eines Windenergieanlagen-Turms gemäß Anspruch 6 gelöst.

Somit wird ein Windenergieanlagen-Turm mit einer Mehrzahl von Turmsegmenten vorgesehen, welche aufeinander platziert werden, um den Turm auszubilden. Ein unteres Turmsegment weist eine untere Stirnseite und in seinem unteren Bereich bzw. im Bereich der unteren Stirnseite eine Mehrzahl von Nischen und Durchgangsbohrungen zwischen der unteren Stirnseite des unteren Turmsegmentes und einem Boden der Nische auf. Die Nischen sind zur Aufnahme einer Nivelliereinheit zur Nivellierung des unteren Turmsegmentes ausgestaltet. Die Nischen sind vorzugsweise auf der Innenseite des unteren Turmsegmentes vorgesehen und stellen eine effektive Möglichkeit der Aufnahme von Nivelliereinheiten dar.

Gemäß einem Aspekt der vorliegenden Erfindung ist eine Mehrzahl von Nivelliereinheiten in den Nischen platziert. Jede der Nivelliereinheiten weist einen Stützfuß und/oder eine Stange auf, welche durch die Durchgangsbohrung in die Nische einführbar ist. Die Nivelliereinheit ist dazu ausgestaltet, die Länge der Stange bzw. den Abstand des unteren Endes des Stützfußes zu dem Boden der Nische zur Nivellierung des unteren Turmsegmentes einzustellen.

Gemäß einem weiteren Aspekt der vorliegenden Erfindung weist die Nivelliereinheit eine Hydraulikeinheit zum Einstellen der Länge der Stange zur Nivellierung des unteren Turmsegmentes auf.

Somit kann die Nivellierung des unteren Turmsegmentes mittels der Hydraulikeinheit insbesondere automatisch und sehr genau erfolgen.

Gemäß einem weiteren Aspekt der vorliegenden Erfindung weist die Nivelliereinheit einen Tragrahmen mit zwei Seitenwänden, einem Boden und einer Decke sowie einem Zwischenboden auf. Der Boden und der Zwischenboden weisen jeweils eine Ausnehmung auf, so dass der Tragrahmen in die Nische einführbar ist, wenn die Stange und/oder der Stützfuß durch das Durchgangsloch in die Nische eingeführt worden ist.

Gemäß einem weiteren Aspekt der vorliegenden Erfindung ist eine Mutter auf die Stange aufgeschraubt. Zur Arretierung der Nivellierung des unteren Turmsegmentes ist die Mutter derart auf die Stange aufgeschraubt, dass sie unterhalb des Zwischenbodens anliegt.

Gemäß einem weiteren Aspekt der Erfindung können der Stützfuß und die (Gewinde-) Stange als ein Teil oder zweiteilig ausgestaltet sein.

Die Erfindung betrifft ebenfalls ein Verfahren zur Errichtung eines Windenergieanlagen-Turms, der ein unteres Turmsegment aufweist, welches eine Mehrzahl von Nischen im unteren Bereich aufweist. Das untere Turmsegment weist ferner eine Mehrzahl von Durchgangsbohrungen zwischen einer unteren Stirnseite des unteren Turmsegmentes und einem Boden der Nische auf. Ein Ende des Stützfußes und/oder einer Stange wird durch die Durchgangsbohrung eingeführt. Eine Nivelliereinheit wird in der Nische platziert und das untere Turmsegment wird durch die Nivelliereinheiten durch Einstellen des Abstandes zwischen dem unteren Ende des Stützfußes und dem Boden der Nische bzw. der Nische ausgerichtet bzw. nivelliert.

Die Erfindung betrifft den Gedanken, im unteren Bereich des untersten Turmsegmentes des Turms der Windenergieanlage und auf der Innenseite des Turms eine Mehrzahl von Nischen vorzusehen, die nach innen hin offen sind und zur Unterseite des untersten Turmsegmentes hin jeweils eine Durchgangsbohrung aufweisen. In diese Nische wird eine Nivelliereinheit eingesetzt, wobei eine (Gewinde-)Stange mit einem Fuß von unten durch die Durchgangsbohrung durchgesteckt wird, so dass das Turmsegment auf den Füßen aufliegt.

Die Höhe bzw. die Länge des (Nivellier-)Fußes kann optional hydraulisch eingestellt werden. Wenn nunmehr eine Mehrzahl von erfindungsgemäßen Nischen und Nivelliereinheiten entlang des Umfangs des unteren Turmsegmentes vorgesehen ist, dann kann durch die Steuerung der Hydraulik die Höhe der Nivellierfüße der jeweiligen Nivelliereinheiten so eingestellt werden, dass das unterste Turmsegment horizontal nivelliert ist. Zur Überprüfung der horizontalen Nivellierung können optische Messeinheiten wie beispielsweise Laser oder dergleichen verwendet werden.

Die erfindungsgemäße Nivelliereinheit weist einen (Nivellier-)Fuß mit einer (Gewinde)Stange auf, welche durch die Durchgangsbohrung zwischen der unteren Stirnseite des untersten Turmsegmentes und des Bodens der Nische vorgesehen ist. Auf dem oberen Ende der Gewindestange wird eine Mutter vorgesehen. Anschließen kann ein Nivellierrahmen (z. B. in Form eines Tragrahmens) in die Nische eingeführt werden. Das Nivelliergestell weist einen Boden und einen Zwischenboden jeweils mit einer Ausnehmung auf. So dass das Nivelliergestell in die Nische eingeführt werden kann, nachdem die Gewindestange durch die Durchgangsbohrung eingeführt ist. Der Zwischenboden des Nivelliergestells befindet sich dann oberhalb der Mutter. Durch Betätigung der Mutter kann diese nach oben geschraubt werden, so dass sie an der Unterseite des Zwischenbodens anliegt. In diesem Fall kann die Belastung, die das untere Turmsegment auf das Fundament ausübt, überden Zwischenboden, die Mutter und die Gewindestange auf den Nivellierfuß übertragen werden.

Gemäß der Erfindung wird eine Mehrzahl von Nischen bzw. Aussparungen auf der Innenseite und im unteren Bereich des unteren Turmsegmentes vorgesehen. Zwischen der Nische und der unteren Stirnseite des unteren Turmsegmentes wird eine Durchgangsbohrung vorgesehen. Die Nische und die Durchgangsbohrung kann nachträglich in das untere Turmsegment gebohrt oder gefräst werden. Alternativ dazu können bei der Herstellung des Turmsegmentes, welches typischerweise ein Betonturmsegment ist, die Nischen sowie die Durchgangslöcher freigelassen werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A: zeigt eine schematische Darstellung eines unteren Turmsegmentes eines Turms einer Windenergieanlage gemäß einem ersten Ausführungsbeispiel,
- Fig. 2B: zeigt eine schematische Schnittansicht eines unteren Turmsegmentes gemäß einem ersten Ausführungsbeispiel,
- Fig. 3: zeigt eine schematische Darstellung einer Nivelliereinheit zum Nivellieren eines unteren Turmsegmentes eines Turms einer Windenergieanlage gemäß dem zweiten Ausführungsbeispiel,
- Fig. 4: zeigt eine schematische Draufsicht auf die Nivelliereinheit von Fig. 3,
- Fig. 5: zeigt eine schematische Seitenansicht der Nivelliereinheit von Fig. 3,
- Fig. 6: zeigt eine schematische Darstellung einer Gewindestange der Nivelliereinheit gemäß dem zweiten Ausführungsbeispiel,
- Fig. 7: zeigt eine Ansicht auf eine Mutter einer Nivelliereinheit gemäß dem zweiten Ausführungsbeispiel, und
- Fig. 8A/8B: zeigen jeweils eine schematische Schnittansicht A - B und A - A und B - B der Mutter von Fig. 7.

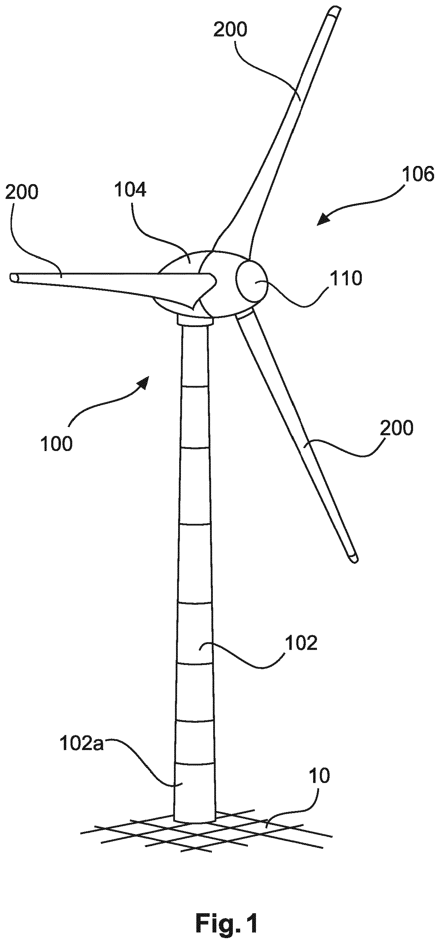

Fig. 1 zeigt eine schematische Darstellung einer Windenergieanlage gemäß der Erfindung. Die Windenergie 100 weist einen Turm 102 und eine Gondel 104 auf dem Turm 102 auf. Der Turm 102 weist eine Mehrzahl von Turmsegmenten 102a auf, welche aufeinander auf einem Fundament 10 platziert sind, um den Turm 102 auszubilden. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

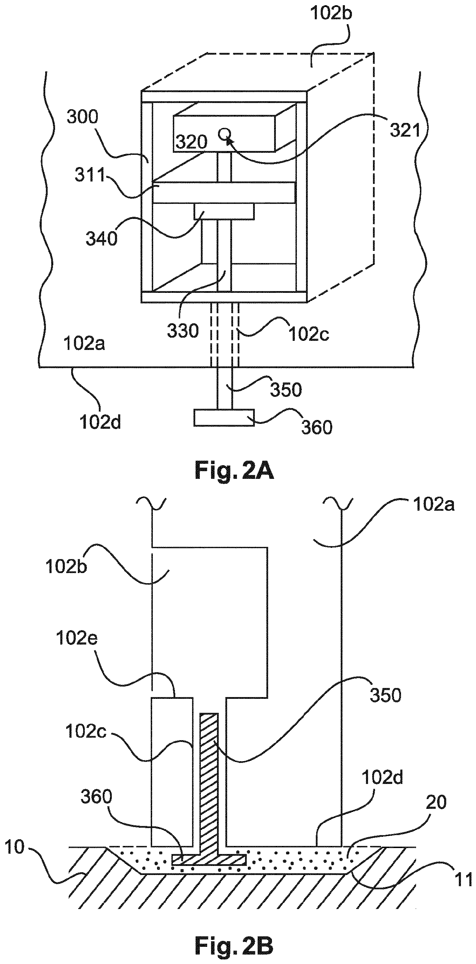

Fig. 2A zeigt eine schematische Darstellung eines Ausschnitts eines unteren Turmsegmentes eines Turms einer Windenergieanlage gemäß einem ersten Ausführungsbeispiel. In dem unteren Turmsegment 102a ist eine Mehrzahl von Nischen 102b vorgesehen. Das untere Turmsegment 102a weist eine (untere) Stirnseite 102d auf. In dem unteren Turmsegment 102a ist eine Mehrzahl von Durchgangslöchern beziehungsweise Durchgangsbohrungen 102c vorgesehen, welche sich zwischen der unteren Stirnseite 102d und einem Boden 102e der Nische 102b erstrecken. In der Nische 102b wird eine Nivelliereinheit 300 vorgesehen. Die Nivelliereinheit 300 weist einen Tragrahmen 310, einen Zwischenboden 311, eine Hydraulikeinheit 320, eine Gewindestange 330 und einen Stützfuß 350 auf. Am unteren Ende des Stützfußes 350 ist ein Nivellierfuß 360 vorgesehen. Der Stützfuß 350 und der Nivellierfuß 360 können als ein Bauteil ausgestaltet sein. Die Gewindestange 330 und der Stützfuß 350 können als ein Bauteil (mit der Gewindestange oben und dem Stützfuß unten) oder als separate Bauteile ausgestaltet sein. Über das obere Ende der Gewindestange 330 wird eine Mutter 340 aufgeschraubt. Der Stützfuß 350 mit dem Nivellierfuß 360 wird in die Durchgangsbohrung 102c eingeführt. Anschließend kann die Gewindestange 330 an dem Stützfuß befestigt (z. B. aufgeschraubt) werden und die Mutter 340 kann auf die Gewindestange 330 aufgeschraubt werden. Danach wird ein Tragrahmen 310 der Nivelliereinheit 300 in die Nische 102b eingeführt. Dazu weisen der Boden 310c und der Zwischenboden 311 jeweils eine Ausnehmung 310f, 311a auf, so dass der Rahmen 310 in die Nische 102b eingeschoben wird und der Stützfuß 350 in den beiden Ausnehmungen 310f, 311a aufgenommen wird. Die Nivelliereinheit 300 weist ebenfalls eine Hydraulikeinheit 320 mit einem Hydraulikanschluss 321 auf. Ein Hydraulikschlauch 321 kann an den Hydraulikanschluss 321 angeschlossen werden, so dass die Hydraulikeinheit 320 angesteuert werden kann. Wenn die Hydraulikeinheit 320 angesteuert wird, dann kann sie da auf das obere Ende der Gewindestange 330 pressen und kann somit das untere Turmsegment 102a anheben oder absenken.

Fig. 2B zeigt eine schematische Schnittansicht eines unteren Turmsegmentes gemäß dem ersten Ausführungsbeispiel. Das untere Turmsegment 102a weist eine untere Stirnseite 102d und eine Mehrzahl von Nischen 102b auf. Vorzugsweise sind die Nischen 102b zur Innenseite des Turmsegmentes hin offen ausgestaltet. Die Nischen 102b weisen einen Boden 102e auf. Zwischen dem Boden 102e der Nische 102b und der Stirnseite 102d des unteren Turmsegmentes ist eine Durchgangsbohrung 102c vorgesehen. In diese Durchgangsbohrung 102c kann ein Stützfuß 350 (von unten) eingeführt werden. Der Stützfuß 350 kann einen Nivellierfuß 360 aufweisen. Optional können der Stützfuß 350 und der Nivellierfuß 360 als ein Bauteil ausgestaltet sein. Nachdem die Stützfüße 350 in die Durchgangsbohrungen 102c eingeführt worden sind, kann ein unteres Turmsegment auf einem Fundament 10 der Windenergieanlage platziert werden. Optional kann eine Ausnehmung 11 auf der Oberseite des Fundaments 10 vorgesehen sein. Die Stützfüße 350 und damit das untere Turmsegment bzw. die untere Stirnseite 102d des unteren Turmsegmentes können in dem Bereich der Ausnehmung 11 platziert werden. Nachdem das untere Turmsegment 102a mittels der Nivelliereinheit 300 gemäß der Erfindung ausgerichtet worden ist, kann die Ausnehmung 11 verpagelt werden bzw. mit einer aushärtbaren Vergussmasse aufgefüllt werden. Dies ist vorteilhaft, weil somit das Gewicht des unteren Turmsegmentes sowie der weiteren Turmsegmente und schließlich der Gondel und des Rotors dann nicht nur auf die Stützfüße 350 aufliegt, sondern über die Pagelmasse 20 verteilt anliegt.

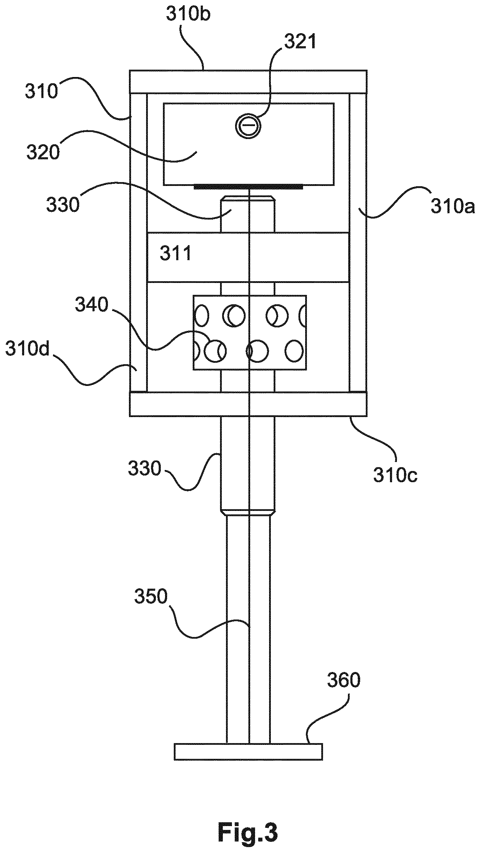

Fig. 3 zeigt eine schematische Darstellung der Nivelliereinheit gemäß einem zweiten Ausführungsbeispiel. Die Nivelliereinheit 300 weist einen (Trag-) Rahmen 310 mit zwei Seitenwänden 310a, 310d, einer Decke 310b, einem Boden 310c und einem Zwischenboden 311 auf. Der Boden 310c und der Zwischenboden 311 können jeweils eine längliche Ausnehmung 310f, 311a aufweisen. Die Nivelliereinheit 300 weist ferner eine Gewindestange 330, einen Stützfuß 350 und einen Nivellierfuß 360 an einem Ende des Stützfußes 350 auf. Über das andere Ende der Gewindestange 330 wird die Mutter 340 aufgeschraubt. Das zweite Ende der Gewindestange 330 ragt im eingebauten Zustand über den Zwischenboden 310 hinaus. Der Stützfuß und die Gewindestange 330 können als separate Bauteile oder als ein Teil ausgestaltet sein.

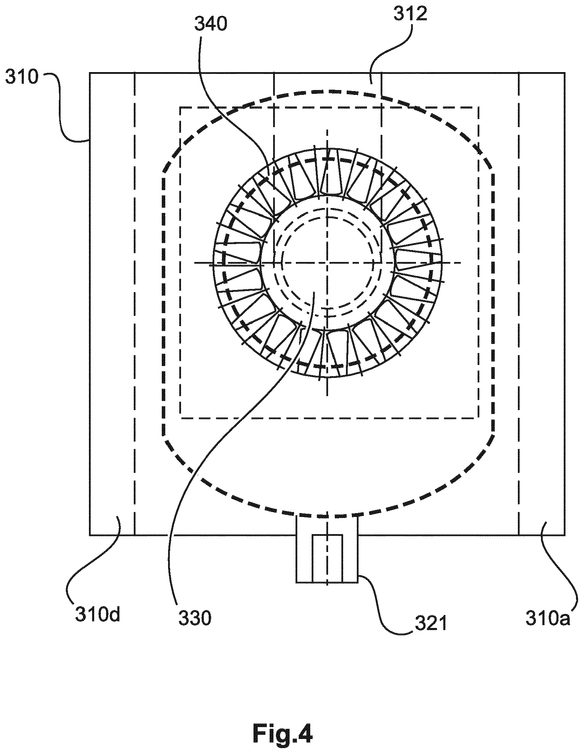

Fig. 4 zeigt eine schematische Darstellung eines schematischen Querschnitts einer Nivelliereinheit gemäß Fig. 3. Die Nivelliereinheit weist einen Tragrahmen mit zwei Seitenwänden 310d, 310a auf. Ferner weist die Nivelliereinheit einen Zwischenboden 311 und einen Boden 310c auf. In dem Boden 310c ist eine Ausnehmung 312 vorgesehen. Entsprechendes gilt für den Zwischenboden 311. Die Ausnehmung 312 dient der Aufnahme der Gewindestange 350, 330.

Die Nivelliereinheit weist ferner eine Gewindestange 330 und eine Mutter 340 auf.

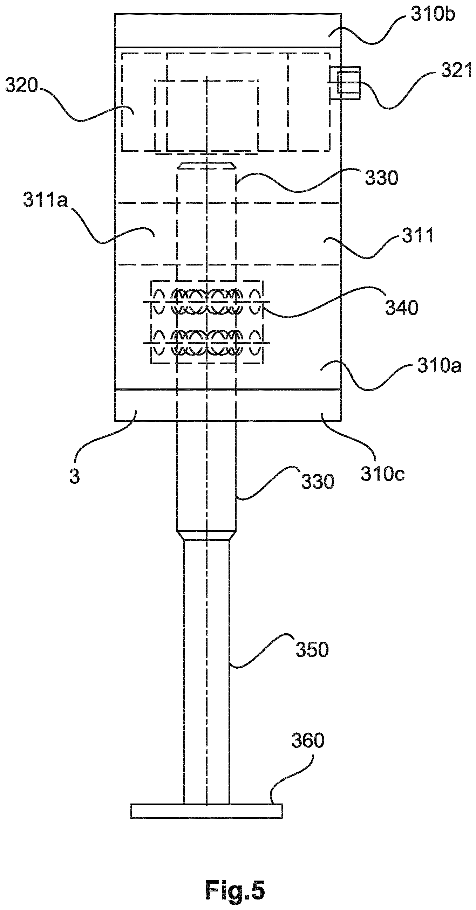

Fig. 5 zeigt eine perspektivische Seitenansicht einer Nivelliereinheit gemäß dem zweiten Ausführungsbeispiel. Die Nivelliereinheit 300 weist einen Stützfuß 350 mit einem (Nivellier)Fuß 360 auf. Die Nivelliereinheit 300 weist ferner einen Tragrahmen 310 mit einem Boden 310c, einer Decke 310b, zwei Seitenwänden 310a, 310d sowie einen Zwischenboden 311 auf. Der Zwischenboden 311 und der Boden 310c weisen jeweils eine Ausnehmung derart auf, dass die Gewindestange in die Ausnehmung aufgenommen werden kann.

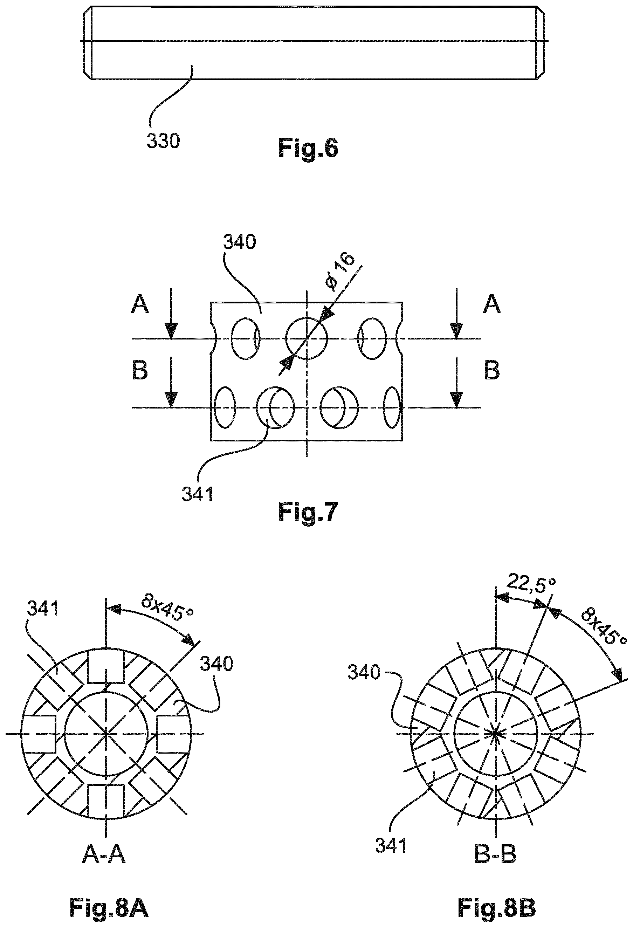

Fig. 6 zeigt eine schematische Darstellung einer Gewindestange 330.

Fig. 7 zeigt eine schematische Darstellung der Mutter 340. Die Mutter 340 weist eine Mehrzahl von Löchern 341 und optional ein Innengewinde auf.

Fig. 8A und 8B zeigen jeweils eine Schnittansicht entlang A - A und B - B der Mutter von Fig. 7. Die Mutter 340 weist eine Mehrzahl von Löchern 341 an ihrer Außenseite auf.

## Patentansprüche

1. Windenergieanlagen-Turm, mit
einer Mehrzahl von Beton-Turmsegmenten (102), welche aufeinander auf einem Fundament (10) platziert sind, um den Turm (102) auszubilden,
wobei ein unterstes Beton-Turmsegment (102a) eine untere Stirnseite (102d) aufweist, wobei eine Mehrzahl von Nischen (102b) und Durchgangsbohrungen (102c) im unteren Bereich des untersten Turmsegments (102a) vorgesehen sind,
wobei die Durchgangsbohrungen (102c) zwischen der unteren Stirnseite (102d) des untersten Turmsegmentes (102a) und einem Boden (102e) jeder der Nische (102b) vorgesehen ist,
wobei jede Nische (102b) zur Aufnahme einer Nivelliereinheit (300) zur Nivellierung des untersten Turmsegmentes (102a) auf dem Fundament (10) ausgestaltet ist,
wobei die Mehrzahl der Nischen (102b) auf einer Innenseite des untersten Turmsegments und nach innen hin offen ausgestaltet sind, ferner mit einer Mehrzahl von Nivelliereinheiten (300), welche in den Nischen (102b) platziert sind,
wobei jede Nivelliereinheit (300) einen Stützfuß (350) und eine Stange (330) aufweist, die durch die jeweilige Durchgangsbohrung (102c) in die jeweilige Nische (102b) eingeführt sind und jede Nivelliereinheit (300) dazu ausgestaltet ist, einen Abstand zwischen dem Boden der jeweiligen Nische und einem unteren Ende des Stützfußes (350) einzustellen.

2. Windenergieanlagen-Turm nach Anspruch 1, wobei
jede Nivelliereinheit (30) eine Hydraulikeinheit (320) aufweist zum Einstellen eines Abstandes zwischen dem Boden der jeweiligen Nische und einem unteren Ende des Stützfußes (350).

3. Windenergieanlagen-Turm nach einem der Ansprüche 1 bis 2, wobei
jede Nivelliereinheit (300) einen Tragrahmen (310) mit zwei Seitenwänden (310d, 310a), einem Boden (310c) und einer Decke (310b) sowie einem Zwischenboden (311) aufweist,
wobei der Boden (310c) und der Zwischenboden (311) jeweils eine Ausnehmung (310f, 311a) aufweist, so dass der Tragrahmen in die Nische (102b) einführbar ist, wenn die Stange (330) durch das Durchgangsloch (102c) in die Nische (102b) eingeführt worden ist.

4. Windenergieanlagen-Turm nach Anspruch 3, wobei
eine Mutter (340) auf die Stange (330) aufgeschraubt ist, wobei zur Arretierung der Nivellierung des untersten Turmsegmentes (102a) die Mutter (340) derart auf die Stange (330, 350) aufgeschraubt ist, dass sie unterhalb des Zwischenbodens (311) anliegt.

5. Windenergieanlagen-Turm nach einem der Ansprüche 1 bis 4, wobei
der Stützfuß (350) und die Stange (330) als ein Teil oder als zwei Teile ausgestaltet sind.

6. Verfahren zum Errichten eines Windenergieanlagen-Turms, der ein unteres BetonTurmsegment (102a) aufweist, mit den Schritten:
Vorsehen einer Mehrzahl von Nischen (102b) in dem unteren Bereich des unteren Beton-Turmsegmentes (102a),
Vorsehen einer Mehrzahl von Durchgangsbohrungen (102c) zwischen einer unteren Stirnseite (102d) des unteren Turmsegmentes (102a) und einem Boden (102e) jeder Nische (102b),
Einführen eines Endes eines Stützfußes (350) durch die Durchgangsbohrung (102c),
Platzieren einer Mehrzahl von Nivelliereinheiten (300) in den Nischen (102b),
Ausrichten und Nivellieren des unteren Turmsegmentes (102a) durch die Mehrzahl der Nivelliereinheiten (300) durch Einstellen eines Abstandes eines unteren Endes des Stützfußes (350) zu dem Boden (102e) der Nische (102b).

7. Verfahren zum Errichten eines Windenergieanlagen-Turms nach Anspruch 6, wobei das untere Turmsegment (120a) mit einer Mehrzahl von in die Durchgangsbohrungen (102c) eingeführten Stützfüßen (350) auf einem Fundament (10) platziert wird und ein Spalt zwischen der Oberseite des Fundaments und der unteren Stirnseite (102d) des unteren Turmsegmentes (102a) mit einer Vergussmasse (200) ausgefüllt und ausgehärtet wird.

8. Windenergieanlage, mit
einem Windenergieanlagen-Turm nach einem der Ansprüche 1 bis 4.

## Claims

1. Wind turbine tower, with
a plurality of concrete tower segments (102) which are placed one on top of another on a foundation so as to form the tower (102),
wherein a lowest concrete tower segment (102a) has a lower end face (102d),
wherein a plurality of cavities (102b) and through bores (102c) are provided in the lower region of the lowest tower segment,
wherein the through bores (102c) are provided between the lower end face (102d) of the lowest tower segment (102a) and a bottom (102e) of each cavity (102b),
wherein each cavity (102b) is configured for receiving a levelling unit (300) for levelling the lowest tower segment (102a) on the foundation,
wherein the plurality of cavities (102b) are provided on an inside of the lowest tower segment and are open towards an inner side, further comprising:
a plurality of levelling units (300) which are placed in the cavities (102b),
wherein each levelling unit (300) has a supporting foot (350) and a rod (330) which are inserted through the respective through bore (102c) into the respective cavity (102b),
wherein each levelling unit (300) is configured to set a separation of the rod (330) between the respective cavity and the lower end of the supporting foot (35).

2. Wind turbine tower according to Claim 1, wherein
each levelling unit (30) has a hydraulic unit (320) for setting a separation between a bottom of a respective cavity and a lower end of the supporting foot.

3. Wind turbine tower according to one of Claims 1 to 2, wherein
the levelling unit (300) has a supporting frame (310) with two sidewalls (310d, 310a), a bottom (310c) and a cover (310b) as well as an intermediate bottom (311),
wherein the bottom (310c) and the intermediate bottom (311) each have a cutout (310f, 311a), such that the supporting frame can be inserted into the cavity (102b) if the rod (330) has been inserted through the through hole (102c) into the cavity (102b).

4. Wind turbine tower according to Claim 3, wherein
a nut (340) is screwed onto the rod (330), wherein for arresting the levelling of the lowest tower segment (102a), the nut (340) is screwed onto the rod (330, 350) such that it bears beneath the intermediate bottom (311).

5. Wind turbine tower according to one of the claims 1 to 4, wherein
the supporting foot (350) and the rod (330) are configured as one part or as two parts.

6. Method for erecting a wind turbine tower which has a lower concrete tower segment (102a) comprising the steps:
providing a plurality of cavities (102b) in a lower region of the lower concrete tower segment (102a),
providing a plurality of through bores (102c) between a lower face side (102d) of the lower tower segment (102a) and a bottom (102e) of each cavity (102b),
inserting one end of a supporting foot (350) through the through bore (102c),
placing a plurality of levelling units (300) into the cavities (102b),
orienting and levelling the lower tower segment (102a) using the plurality of levelling units (300) by setting a separation between a lower end of the supporting foot (350) and the bottom (102e) of the cavity (102b).

7. Method for erecting a wind turbine tower according to Claim 6, wherein the lower tower segment (120a) with a plurality of supporting feet (350) inserted into the through bores (102c) is placed on a foundation (10) and a gap between the upper side of the foundation and the lower end face (102d) of the lower tower segment (102a) is filled with a casting compound (200) which is then cured.

8. Wind turbine, with
a wind turbine tower according to one of Claims 1 to 4.

## Revendications

1. Tour d'éolienne, avec
une pluralité de segments de tour en béton (102), qui sont placés les uns sur les autres sur une fondation (10) pour former la tour (102),
dans laquelle un segment de tour en béton le plus bas (102a) comprend une face frontale inférieure (102d), dans laquelle une pluralité de niches (102b) et de trous débouchants (102c) sont prévus dans la zone inférieure du segment de tour le plus bas (102a),
dans laquelle les trous débouchants (102c) sont prévus entre la face frontale inférieure (102d) du segment de tour le plus bas (102a) et un fond (102e) de chacune des niches (102b),
dans laquelle chaque niche (102b) est agencée pour recevoir une unité de mise à niveau (300) pour la mise à niveau du segment de tour le plus bas (102a) sur la fondation (10),
dans laquelle la pluralité des niches (102b) sont agencées sur une face interne du segment de tour le plus bas et ouvertes vers l'intérieur, en outre avec une pluralité d'unités de mise à niveau (300) qui sont placées dans les niches (102b),
dans laquelle chaque unité de mise à niveau (300) comprend un pied d'appui (350) et une barre (330), qui sont introduits à travers le trou débouchant concerné (102c) dans la niche concernée (102b) et chaque unité de mise à niveau (300) est agencée pour régler une distance entre le fond de la niche concernée et une extrémité inférieure du pied d'appui (350).

2. Tour d'éolienne selon la revendication 1, dans laquelle
chaque unité de mise à niveau (30) comprend une unité hydraulique (320) pour le réglage d'une distance entre le fond de la niche concernée et une extrémité inférieure du pied d'appui (350).

3. Tour d'éolienne selon l'une quelconque des revendications 1 à 2, dans laquelle
chaque unité de mise à niveau (300) comprend un cadre porteur (310) avec deux parois latérales (310d, 310a), un fond (310c) et un couvercle (310b) ainsi qu'un faux fond (311),
dans laquelle le fond (310c) et le faux fond (311) comprennent chacun un évidement (310f, 311a) de sorte que le cadre porteur peut être introduit dans la niche (102b), lorsque la barre (330) a été introduite à travers le trou débouchant (102c) dans la niche (102b).

4. Tour d'éolienne selon la revendication 3, dans laquelle
un écrou (340) est vissé sur la barre (330), dans laquelle, pour l'arrêt de la mise à niveau du segment de tour le plus bas (102a), l'écrou (340) est vissé sur la barre (330, 350) de manière qu'il repose en dessous du faux fond (311).

5. Tour d'éolienne selon l'une quelconque des revendications 1 à 4, dans laquelle
le pied d'appui (350) et la barre (330) sont agencés en tant qu'une pièce ou en tant que deux pièces.

6. Procédé pour ériger une tour d'éolienne, qui comprend un segment de tour en béton inférieur (102a), avec les étapes :
de prévision d'une pluralité de niches (102b) dans la zone inférieure du segment de tour en béton inférieur (102a),
de prévision d'une pluralité de trous débouchants (102c) entre une face frontale inférieure (102d) du segment de tour inférieur (102a) et un fond (102e) de chaque niche (102b),
d'introduction d'une extrémité d'un pied d'appui (350) à travers le trou débouchant (102c),
de placement d'une pluralité d'unités de mise à niveau (300) dans les niches (102b),
d'alignement et de mise à niveau du segment de tour inférieur (102a) par le biais de la pluralité des unités de mise à niveau (300) par le biais du réglage d'une distance d'une extrémité inférieure du pied d'appui (350) au fond (102e) de la niche (102b).

7. Procédé pour ériger une tour d'éolienne selon la revendication 6, dans laquelle le segment de tour inférieur (120a) est placé avec une pluralité de pieds d'appui (350), introduits dans les trous débouchants (102c), sur une fondation (10) et un espace entre la face supérieure de la fondation et la face frontale inférieure (102d) du segment de tour inférieur (102a) est rempli avec une masse de scellement (200) et durci.

8. Éolienne, avec
une tour d'éolienne selon l'une des revendications 1 à 4.
